# EUROPÄISCHE PATENTSCHRIFT

(11) **EP 2 284 349 B1**
(45) Veröffentlichungstag und Bekanntmachung des Hinweises auf die Patenterteilung: **07.09.2016**
(21) Anmeldenummer: 09008948.3
(22) Anmeldetag: 09.07.2009
(51) Int. Cl.: E06B 3/96, B29C 65/00

(54) **Rahmenbaugruppe für ein Fenster oder eine Tür**
Frame component for a window or a door
Module d'encadrement pour une fenêtre ou une porte

(43) Veröffentlichungstag der Anmeldung: 16.02.2011
(73) Patentinhaber: REHAU AG + Co, 95111 Rehau (DE)
(72) Erfinder: Zwack, Armin, 92694 Etzenricht (DE)

(56) Entgegenhaltungen:
- DE-A1- 4 022 827
- DE-U1-202006 002 741
- GB-A- 2 451 893

## Beschreibung

Die vorliegende Erfindung betrifft eine Rahmenbaugruppe für ein Fenster und/oder eine Tür, die mindestens ein Kunststoffprofil, das einen Außenüberschlag mit wenigstens einer Hohlkammer, einen Aufnahmeabschnitt und eine am Außenüberschlag angeordnete Nut zur Aufnahme eines Dichtungselements und ein in die Nut eingezogenes Dichtungselement umfasst, wobei eine durch die offene Seite der Nut des Kunststoffprofils gebildete Ebene gegen eine Normale zur Unterseite des Kunststoffprofils abgeschrägt ist.

Eine Vielzahl derartiger Kunststoffprofile und Rahmenbaugruppen für Türen und Fenster sind im Stand der Technik beschrieben. Beispielsweise beschreibt die DE 40 22 827 A1 eine Rahmenbaugruppe mit einem Kunststoffprofil, wobei die Dichtungsaufnahmenut am Außenüberschlag abgeschrägt ausgebildet ist. Eine Rahmenbaugruppe mit schräg gestellter, an den Außenüberschlag anextrudierter Dichtung ist aus der GB 2 451 893 A bekannt. Derartige Rahmenbaugruppen aus Kunststoffprofilen werden in an sich bekannter Weise durch Extrusion bzw. Coextrusion hergestellt und zu Fenster bzw. Türen verarbeitet, indem auf Gehrung geschnittene Kunststoffprofile zu den Eckbereichen der entsprechenden Fenster bzw. Türen verschweißt werden.

Generell weisen Kunststoffprofile für Türen und Fenster einen Außenüberschlag auf, an dem sich ein Dichtungselement befindet. Nach dem Verschweißen der Kunststoffprofile zu Rahmenbaugruppen für Türen oder Fenster umrahmt ein derartiges Dichtungselement ein in den Rahmen eingesetztes Flächentragelement, wobei das Dichtungselement zur Abdichtung des Flächentragelements gegenüber dem Kunststoffprofil dient.

Beim Zusammenbau von Kunststoffprofilen zu Rahmenbaugruppen für den Fenster-, Türen- und Fassadenbau werden die auf Länge abgeteilten und an ihren Stirnseiten auf Gehrung geschnittenen Kunststoffprofile an ihren Gehrungsstößen zunächst mit einem Schweißspiegel plastifiziert. In Abhängigkeit von Wandstärke und Raumform der Kunststoffprofile ist dafür ein bestimmter Zeitraum bei erhöhter Temperatur (beispielsweise im Bereich von 250-270°C) erforderlich. Nach dem Plastifizieren wird der Schweißspiegel von den einander gegenüberliegenden Stirnseiten der Kunststoffprofile entfernt und daraufhin werden die plastifizierten Stirnseiten der Kunststoffprofile unter definiertem Druck für eine bestimmte Zeit gegeneinander gepresst, wodurch die Kunststoffprofile an ihren Gehrungsstößen miteinander verschweißt werden. Dabei entstehen an den Gehrungsstößen sog. Schweißwülste (oder Schweißabbrand), die an die Oberfläche der Rahmenbaugruppe gedrückt werden und von dort beispielsweise durch Putzen, Fräsen, Schälen oder Schneiden entfernt werden müssen und zwar insbesondere von Stellen, an denen dieses Entfernen aus Gründen der Optik und/oder zur exakten Lagefixierung von Dichtungselementen notwendig ist. Auf diese Weise können beispielsweise anschließend Dichtungselemente über ihre Verankerungsfüße über die Gehrungsstöße hinweg kontinuierlich in die jeweiligen Aufnahmenuten der Tür- und/oder Fensterprofile eingebettet werden.

Für dieses Verfahren sind zur Herstellung von Rahmenbaugruppen bislang überwiegend Dichtungselemente aus thermoplastischen, elastomeren Werkstoffen eingesetzt worden. Dabei hat sich gezeigt, dass die Schweißwülste, die zwangsläufig im Bereich der Aufnahmenuten durch Zusammenpressen der plastifizierten Stirnseiten der Kunststoffprofile entstehen, einen scharfen, messerartigen Charakter aufweisen und somit die Dichtungselemente an den Gehrungsstößen beschädigen oder gar vollständig durchtrennen können. Dies kann Undichtigkeiten der entsprechenden Rahmenbaugruppen mit weiteren daraus resultierenden Nachteilen zur Folge haben. Darüber hinaus können derartige Schweißwülste dazu führen, dass sich das Dichtungselement im Bereich der Gehrung vom Kunststoffprofil abhebt, was Fehlfunktionen und harte Gehrungsecken der Dichtungselemente bedingen kann.

Eine Weiterführung dieses Verfahrens ist aus der EP 0 838 324 A2 bekannt. Durch das darin beschriebene Verfahren zum Zusammenfügen von Kunststoffprofilen zu Rahmenbaugruppen soll gewährleistet werden, dass die elastische Funktion der zu verschweißenden Dichtungen im Bereich der Gehrungsabschnitte auch nach dem Verschweißen erhalten bleibt. Zu diesem Zweck sieht das in der EP 0 838 324 A2 beschriebene Verfahren vor, während des Verschweißens der auf Gehrung geschnittenen Rahmenprofile aus Kunststoff mit den eingezogenen Dichtungen die von Dichtlippe und Befestigungsfuß der Dichtung gebildete Innenkontur der Dichtung in der Gehrungsebene und dazu benachbart durch mindestens ein Formteil, das als Schweißzulage bezeichnet wird, konturgerecht oder nahezu konturgerecht abzudecken und die Schweißzulage nach dem Verschweißen aus dem Dichtungsbereich zu entfernen. Das Abdecken der Innenkontur der Dichtungselemente im Bereich der Gehrung mittels der Schweißzulage soll verhindern, dass sich beim Verschweißen der Rahmenprofile aus Kunststoff speziell im Innenbereich der Dichtung eine Schweißraupe ausbilden kann, die sich auf die Elastizität des Dichtungselements insbesondere im Gehrungsbereich negativ auswirken kann.

Dieses Verfahren besitzt jedoch den Nachteil, dass beim Verschweißen der Kunststoffprofile zu Rahmenbaugruppen die im Kunststoffprofil eingezogenen Dichtungselemente durch weitere Bauteile wie Dichtungsniederhalter, Schneidzulagen oder Schneidniederhalter während der einzelnen Bearbeitungsschritte gehalten werden müssen, was das Verfahren verkompliziert und die für das Verfahren erforderlichen Anlagen und damit auch die durch das Verfahren hergestellten Rahmenbaugruppen verteuert. Insbesondere müssen für jede Raumform des Dichtungselements bzw. der Rahmenbaugruppe spezielle derartige Dichtungsniederhalter, Schneidzulagen oder Schneidniederhalter hergestellt, auf Lager gehalten und für die jeweiligen Arbeitsgänge montiert und demontiert werden. Dadurch treten bei der Herstellung der Rahmenbaugruppen zusätzlich Fehlerquellen auf, so dass die Herstellung der Rahmenbaugruppen weiter verteuert wird.

Ein weiterer Nachteil des in der EP 0 838 324 A2 beschriebenen Verfahrens besteht darin, dass in diesem Verfahren nur Dichtungselemente aus thermoplastischen, also schweißbaren Materialien eingesetzt werden können, um eine vollständige Dichtheit insbesondere im Gehrungsbereich der Rahmenbaugruppen zu gewährleisten. Nur die Verwendung derartiger schweißbarer Materialien in Verbindung mit den zusätzlichen Elementen wie Dichtungsniederhaltern, Schneidzulagen oder Schneidniederhaltem ermöglicht ein festes konturgerechtes Verschweißen der Dichtungselemente im Gehrungsbereich, wofür wiederum für jedes Dichtungselement spezifische Schweißzulagen erforderlich werden.

Gemäß der DE 20 2006 002 741 U1 kann die Verwendung von Elementen wie Niederhaltern beim Verschweißen von Tür- und/oder Fensterprofilen dadurch vermieden werden, dass das Tür- und/oder Fensterprofil einen Außenüberschlag mit einer darin angeordneten Nut zur Aufnahme eines Dichtungselements aufweist, wobei die Nut etwa orthogonal zu einem Falzgrund des Tür- und/oder Fensterprofils angeordnet ist und zwischen dem Falzgrund und dem Dichtungselement ein das Dichtungselement wenigstens teilweise abstützendes Halteelement angeordnet ist

Die Anordnung eines derartigen Halteelements zwischen dem Falzgrund und dem Dichtungselement sowie die etwa orthogonale Anordnung der Nut zum Falzgrund stellen aber Einschränkungen bei der Wahl der Profilgeometrie dar.

Somit liegt der vorliegenden Erfindung die Aufgabe zu Grunde, die Nachteile des Stands der Technik zu überwinden und eine Rahmenbaugruppe für ein Fenster und/oder eine Tür mit einem Kunststoffprofil zur Verfügung zu stellen, das ein wirtschaftliches und kostengünstiges Verschweißen der Kunststoffprofile zu einer Rahmenbaugruppe ermöglicht, wobei die Kunststoffprofile mit den darin eingezogenen Dichtungselementen werkstoff- und geometrieunabhängig mit bekannten Schweißmaschinen verbindbar sein sollen und die im Gehrungsbereich eine den gesetzlichen Bestimmungen genügende Dichtheit aufweisen sollen. Darüber hinaus sollen die Dichtungselemente insbesondere im Gehrungsbereich auch nach dem Verschweißen bzw. Fügen elastisch bleiben.

Erfindungsgemäß werden diese Aufgaben durch eine Rahmenbaugruppe für ein Fenster und/oder eine Tür gemäß Anspruch 1 gelöst. Bevorzugte Ausführungsformen der erfindungsgemäßen Rahmenbaugruppe sind in den jeweils davon abhängigen Ansprüchen beschrieben.

Es wurde gemäß der vorliegenden Erfindung erkannt, dass das Auftreten von Schweißwülsten an der außen sichtbaren Oberfläche der Kunststoffprofile beim Verschweißen von auf Gehrung geschnittenen Kunststoffprofilen im Bereich der Dichtungselemente überraschenderweise stark vermindert werden kann, indem die Nut zur Aufnahme des Dichtungselements abgeschrägt angeordnet ist.

Damit stellt die vorliegende Erfindung eine Rahmenbaugruppe für ein Fenster und/oder eine Tür zur Verfügung, die mindestens ein Kunststoffprofil mit einem Außenüberschlag mit wenigstens einer Hohlkammer, einem Aufnahmeabschnitt und einer am Außenüberschlag angeordneten Nut zur Aufnahme eines Dichtelements und einem in die Nut eingezogenen Dichtelement umfasst, wobei eine durch die offene Seite der Nut gebildete Ebene um einen Winkel im Bereich von 8° bis 12° gegen eine Normale zur Unterseite des Kunststoffprofils abgeschrägt ist.

Auf diese Weise ist gewährleistet, dass in der resultierenden Rahmenbaugruppe das Dichtungselement im Gehrungsbereich konturgerecht verschweißt ist und nach dem Verschweißen weich und elastisch bleibt. Durch diese erfindungsgemäß abgeschrägte Anordnung der Dichtungsaufnahmenut sind beim Verschweißen der Kunststoffprofile zu Rahmenbaugruppen für Türen und/oder Fenster keine zusätzlichen Sonderbauteile in den Schweißmaschinen bzw. in den Schneidmaschinen erforderlich. Die Rüstkosten derartiger Maschinen sowie die Lagerhaltung und Bevorratung zusätzlicher Elemente wie Dichtungsniederhalter, Schneidzulagen, Schneidniederhalter bzw. Schweißzulagen sind nicht mehr erforderlich. Das erfindungsgemäße Kunststoffprofil hat den weiteren Vorteil, dass es für die daraus resultierenden Rahmenbaugruppen die Verwendung von Dichtungselementen sowohl aus schweißbarem, als auch aus nicht schweißbarem Material ermöglicht. Bei Dichtungselementen aus nicht schweißbaren Materialien ist gewährleistet, dass sich diese aufgrund der verringerten Bildung von Schweißbrandwülsten an der sichtbaren Oberfläche der Kunststoffprofile im Gehrungsbereich nicht vom Profil abheben und durch den Fügevorgang eine entsprechende Dichtheit im Gehrungsbereich erzeugt werden kann.

Das Kunststoffprofil erlaubt damit überraschenderweise eine kostengünstige, geometrie- und materialunabhängige Herstellung von Rahmenbaugruppen für Fenster und/oder Türen, die im Gehrungsbereich über die erforderliche Dichtheit verfügen.

Erfindungsgemäß ist die durch die offene Seite der Nut gebildete Ebene um einen Winkel im Bereich von 8° bis 12° und bevorzugt um etwa 10° gegen eine Normale zur Unterseite des Kunststoffprofils abgeschrägt. Liegt der Winkel, um den die Nut gegen die Normale zur Unterseite des Profils abschrägt ist, innerhalb des genannten Bereichs, wird ein Auftreten von Schweißabbrand an der Außenoberfläche des Kunststoffprofils in ausreichender Weise verhindert, so dass beim Verschweißen der auf Gehrung geschnittenen Kunststoffprofile auf die Verwendung zusätzlicher Elemente wie Dichtungsniederhalter, Schneidzulagen, Schneidniederhalter bzw. Schweißzulagen verzichtet werden kann, wobei durch die Abschrägung der Nut die optische Ausgestaltung der das Kunststoffprofil enthaltenden erfindungsgemäßen Rahmenbaugruppe nicht übermäßig nachteilig beeinflusst wird.

Darüber hinaus kann es nützlich sein, wenn unterhalb der Nut ein Halteelement vorgesehen ist. Durch eine derartige Anordnung des Halteelementes unterhalb der Nut kann ein in die Nut eingezogenes Dichtungselement teilweise abgestützt werden. Auf diese Weise kann das Dichtungselement während des Verschweißens der auf Gehrung geschnittenen Kunststoffprofile zu erfindungsgemäßen Rahmenbaugruppen gestützt bzw. gehalten werden, so dass ein konturgerechtes Verschweißen des Dichtungselements im Gehrungsbereich weiter gefördert wird. Ferner erhöht ein stoffschlüssiges Verbinden der Halteelemente der Fensterprofile durch das Verschweißen die Eckfestigkeit der resultierenden Rahmenbaugruppe zusätzlich. Es kann in diesem Zusammenhang in Bezug auf die erfindungsgemäße Rahmenbaugruppe daher auch von Vorteil sein, wenn das Halteelement das Dichtungselement zumindest teilweise abstützt. Dabei kann es sich als besonders günstig erweisen, wenn das Halteelement an dem in die Nut eingezogenen Dichtungselement anliegt.

Es kann ferner günstig sein, wenn dieses Halteelement aus einem härten Werkstoff als das in die Nut eingezogene Dichtungselement aufgebaut ist. Dadurch kann gewährleistet werden, dass das Halteelement selbst im Gehrungsbereich verschweißt ist und somit das Dichtungselement in diesem kritischen Bereich beim Verschweißen zusätzlich führt bzw. abstützt.

Im Folgenden soll die vorliegende Erfindung anhand der in den Figuren dargestellten, nicht einschränkenden Ausführungsbeispiele näher beschrieben werden.

In den Figuren zeigt
- Fig. 1: eine Querschnittsdarstellung eines Kunststoffprofils zur Verwendung in einer erfindungsgemäßen Rahmenbaugruppe,
- Fig. 2: einen Schnitt durch eine partiell dargestellte erfindungsgemäße Rahmenbaugruppe, in die ein Flächentragelement in Form einer Isolierverglasung eingesetzt ist, und
- Fig. 3: einen Schnitt durch eine weitere partiell dargestellte erfindungsgemäße Rahmenbaugruppe aus Flügel- und Blendrahmen, wobei in den Flügelrahmen ein Flächentragelement in Form einer Isolierverglasung eingesetzt ist.

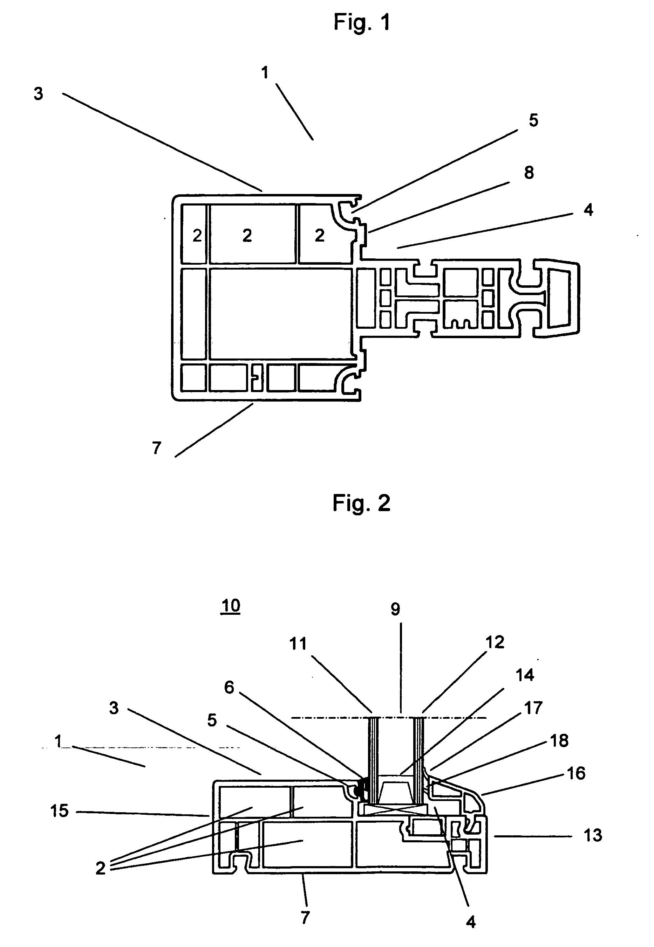

In Fig. 1 ist eine Ausführungsform des Kunststoffprofils 1 dargestellt. Es ist als Fensterprofil ausgestaltet und weist einen Außenüberschlag 3 mit mehreren Hohlkammern 2 und einen Aufnahmeabschnitt 4 auf. An der dem Aufnahmeabschnitt 4 zugewandten Seite des Außenüberschlags 3 ist eine Nut 5 zur Aufnahme eines Dichtungselements (in Fig. 1 nicht dargestellt) angeordnet. In an sich bekannter Weise ist das Kunststoffprofil 1 aus Hohlkammern 2 sowie diese umgebende Stege aus einem thermoplastisch verarbeitbaren Werkstoff wie beispielsweise PVC aufgebaut und durch Extrusion hergestellt.

Die durch die offene Seite der Nut 5 gebildete Ebene ist um einen Winkel von etwa 10° gegen eine Normale zu einer Unterseite 7 des Kunststoffprofils 1 abgeschrägt. In diese Nut 5 ist ein Dichtungselement, insbesondere ein Dichtungsprofil eingezogen. Das Einziehen des Dichtungselements kann entweder nachträglich, wobei das Dichtungselement beispielsweise durch Einrollen eingebracht werden kann, indem ein Fuß des Dichtungselementes in die hinterschnittig ausgebildete Nut 5 eingepresst wird und diese kraftschlüssig hintergreift, oder bei der Herstellung des Kunststoffprofils mittels Coextrusion erfolgen. In letzterem Fall ist das Dichtungselement stoffschlüssig mit der Nut 5 verbunden.

Unterhalb der Nut 5 ist in diesem Ausführungsbeispiel ein Halteelement 8 angeordnet, das an den Außenüberschlag 3 einstückig angeformt ist und in Richtung des Aufnahmeabschnitts 4 ragt. Das Halteelement 8 des Kunststoffprofils 1 ist vorzugsweise aus einem härteren Werkstoff als das in die Nut 5 einzuziehende Dichtungselement 6 hergestellt, das aus bekannten weichelastischen Materialien hergestellt ist.

Beim Verschweißen der an den Stirnseiten auf Gehrung zugesägten Kunststoffprofile 1 zu einer erfindungsgemäßen Rahmenbaugruppe ohne Verwendung von Dichtungsniederhaltern tritt durch die abgeschrägte Anordnung der Dichtungsaufnahmenut 5 im Gehrungsbereich kaum Schweißabbrandmaterial an der sichtbaren Oberfläche des Kunststoffprofils 1 auf, so dass das in die Nut 5 eingezogene Dichtungselement aus einem thermoplastischen Material über seinen gesamten Querschnitt mit dem gegenüberliegenden Dichtungselement verschweißt ist und somit zu einer optimalen Dichtheit der resultierenden Rahmenbaugruppe führt. Auch nach dem Verschweißen bleiben die Dichtungselemente im kritischen Gehrungsbereich weich und elastisch.

Das Dichtungselement kann in einer alternativen Ausführungsform auch aus einem nicht thermoplastisch verarbeitbaren Material hergestellt sein. In diesem Fall ist durch die Abschrägung der Dichtungsaufnahmenut 5 gewährleistet, dass das Dichtungselement in der resultierenden Rahmenbaugruppe dichtend gegen das gegenüberliegende Dichtungselement gepresst wird.

In Fig. 2 ist ein Ausführungsbeispiel einer erfindungsgemäßen Rahmenbaugruppe 10 dargestellt. Die Rahmenbaugruppe 10 umfasst einen Kunststoffprofilrahmen 13, der ein Flächentragelement 9 in dessen Stirnseitenbereichen umgibt. In diesem Ausführungsbeispiel ist das Flächentragelement 9 eine Isolierverglasung mit zwei miteinander über ein Verbindungselement 14 verbundenen Glasscheiben 11, 12.

Der Kunststoffprofilrahmen 13 ist aus einem Hauptprofil 15, der aus dem Kunststoffprofil 1 aufgebaut ist, und einem Zusatzprofil 16 zusammengesetzt, wobei an das Zusatzprofil 16 elastische Dichtlippen 17, 18 anextrudiert sind. Die freien Enden der Dichtlippen 17, 18 liegen an der ihnen zugewandten Wand des Stirnseitenbereichs der Glasscheibe 12 an.

Das Hauptprofil 15 des Kunststoffprofilrahmens 13 weist einen Außenüberschlag 3 mit Hohlkammern 2 und einen Aufnahmeabschnitt 4 auf. An der dem Aufnahmeabschnitt 4 zugewandten Seite des Außenüberschlags 3 ist eine Nut 5 angeordnet, in die das Dichtungselement 6 eingebracht ist, das in dieser Ausführungsform als durch Coextrusion eingebrachtes Dichtungselement 6 aus einem thermoplastischen Material ausgebildet ist. Alternativ dazu kann das Dichtungselement 6 auch aus einem nicht thermoplastisch verarbeitbaren Material hergestellt sein. In diesem Fall wird das Dichtungselement 6 nachträglich in die Dichtungsaufnahmenut 5 eingezogen.

Die durch die offene Seite der Nut 5 gebildete Ebene ist um einen Winkel von ungefähr 10° gegen eine Normale zur Unterseite 7 des Kunststoffprofils 1 abgeschrägt.

Durch die abgeschrägte Anordnung der Dichtungsaufnahmenut 5 im Hauptprofil 15 des Kunststoff-Profilrahmens 13 wurde in den Eckbereichen der erfindungsgemäßen Rahmenbaugruppe 10 beim Verschweißen ohne Verwendung von Dichtungsniederhaltern kaum Schweißabbrandmaterial an die sichtbaren Oberflächen gedrückt. Dadurch ist das in die Nut 5 einextrudierte Dichtungselement 6 in der erfindungsgemäßen Rahmenbaugruppe 10 über seinen gesamten Querschnitt mit dem gegenüberliegenden Dichtungselement verschweißt, wobei die Weichheit und Elastizität der Dichtungselemente in den Eckbereichen der Rahmenbaugruppe durch das Verschweißen nicht beeinträchtig wurden, so dass eine optimale Dichtheit gewährleistet ist. Für den Fall eines Dichtungselements 6 aus einem nicht thermoplastisch verarbeitbaren Material ist durch die Abschrägung der Dichtungsaufnahmenut 5 gewährleistet, dass das Dichtungselement 6 in der resultierenden Rahmenbaugruppe 10 dichtend gegen das gegenüberliegende Dichtungselement 6 gepresst wird.

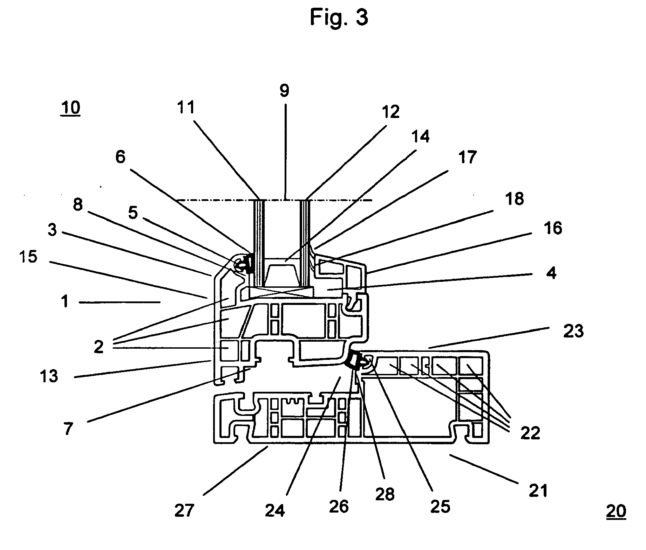

In Fig. 3 ist eine weitere Ausführungsform einer erfindungsgemäßen Rahmenbaugruppe 10 dargestellt, wobei diese Rahmenbaugruppe 10 aus einem Kunststoffprofil 1, das als Flügelrahmen ausgebildet ist, und einem Kunststoffprofil 21, welches als Blendrahmen ausgebildet ist, aufgebaut ist.

Der Flügelrahmen umfasst einen Kunststoffprofilrahmen 13, in den eine Isolierverglasung mit zwei miteinander über ein Verbindungselement 14 verbundenen Glasscheiben 11, 12 als Flächentragelement 9 eingesetzt ist, wobei der Kunststoffprofilrahmen 13 die Isolierverglasung stirnseitig umläuft. Der Kunststoffprofilrahmen 13 setzt sich aus einem Hauptprofil 15, der aus dem erfindungsgemäßen Kunststoffprofil 1 aufgebaut ist, und einem Zusatzprofil 16 zusammen, wobei an das Zusatzprofil 16 elastische Dichtlippen 17, 18 coextrudiert sind, deren freie Enden an der ihnen zugewandten Wand des Stirnseitenbereichs der Glasscheibe 12 anliegen.

Das Hauptprofil 15 des Kunststoffprofilrahmens 13 besitzt wiederum einen Außenüberschlag 3 mit Hohlkammern 2 und einen Aufnahmeabschnitt 4, wobei an der dem Aufnahmeabschnitt 4 zugewandten Seite des Außenüberschlags 3 eine Nut 5 angeordnet ist, in die das Dichtungselement 6 eingebracht ist. In dieser Ausführungsform der vorliegenden Erfindung ist das Dichtungselement 6 durch Einrollen in die Nut 5 nachträglich eingebracht, wobei der Fuß des Dichtungselementes 6 in die hinterschnittig ausgebildete Nut 5 eingepresst ist und diese kraftschlüssig hintergreift. Das Dichtungselement 6 ist dabei aus einem nicht thermoplastisch verarbeitbaren Material hergestellt. Alternativ dazu könnte das Dichtungselement 6 auch aus einem thermoplastischen, elastomeren Material ausgebildet und durch Coextrusion stoffschlüssig in die Nut 5 eingebracht worden sein.
In dem Flügelrahmenprofil ist die Dichtungsaufnahmenut 5 wiederum abgeschrägt angeordnet, wobei die durch die offene Seite der Nut 5 gebildete Ebene um einen Winkel von ungefähr 10° gegen eine Normale zur Unterseite 7 des Kunststoffprofils 1 abgeschrägt ist.

Unterhalb der Nut 5 ist in dem Flügelrahmenprofil ein Halteelement 8 angeordnet, das an den Außenüberschlag 3 einstückig angeformt ist und in Richtung des Aufnahmeabschnitts 4 ragt. Das Halteelement 8 des Kunststoffprofils 1 ist aus einem härteren Werkstoff als ein in die Nut 5 eingezogenes Dichtungselement 6 hergestellt, das wiederum aus bekannten weichelastischen Materialien hergestellt ist, und stützt das Dichtungselement 6 teilweise ab.

Am Fensterprofil 1, das als Flügelrahmen ausgebildet ist, liegt über ein weiteres Dichtungselement 26 ein weiteres Fensterprofil 21 an, das als Blendrahmen ausgebildet ist. Auch das Fensterprofil 21 weist einen Außenüberschlag 23 mit Hohlkammern 22 und einen Aufnahmeabschnitt 24 auf, wobei an der dem Aufnahmeabschnitt 24 zugewandten Seite des Außenüberschlags 23 eine Nut 25 angeordnet ist, in die das Dichtungselement 26 eingezogen ist. Auch in dem als Blendrahmen ausgeführten Kunststoffprofil 21 ist das Dichtungselement 26 nachträglich durch Einrollen in die hinterschnittig ausgebildete Nut 25 eingebracht, wobei der Fuß des Dichtungselements 26 die Nut 25 kraftschlüssig hintergreift. Dabei ist das Dichtungselement 26 aus einem nicht thermoplastisch verarbeitbaren Material hergestellt.

In dem Blendrahmenprofil ist die Dichtungsaufnahmenut 25 abgeschrägt angeordnet, wobei die durch die offene Seite der Nut 25 gebildete Ebene wiederum um einen Winkel von ungefähr 12° gegen eine Normale zur Unterseite 27 des Kunststoffprofils 21 abgeschrägt ist. Unterhalb der Nut 25 ist in dem Flügelrahmenprofil ein Halteelement 28 angeordnet. Das Halteelement 28 ist einstückig an den Außenüberschlag 23 angeformt ist, wobei es in Richtung des Aufnahmeabschnitts 24 weist. Das Halteelement 28 des Kunststoffprofils 21 ist aus einem härteren Werkstoff als das in die Nut 25 eingezogene Dichtungselement 26 aus weichelastischem Material hergestellt.

Beim Verschweißen der auf Gehrung geschnittenen Stirnseiten der Fensterprofile 1, 21 wurde aufgrund der abgeschrägten Anordnung der Dichtungsaufnahmenuten 5, 25 in den Eckbereichen der erfindungsgemäßen Rahmenbaugruppe 10 beim Verschweißen ohne Verwendung von Dichtungsniederhaltern kaum Schweißabbrandmaterial an die sichtbaren Oberflächen gedrückt. Zusätzlich erfolgte durch die Halteelemente 8, 28 ein Fixieren und Abstützen der Dichtungselemente 6, 26 derart, dass die aus einem nicht thermoplastisch verarbeitbaren Material hergestellten Dichtungselemente 6, 26 durch die verschweißten Halteelemente 8, 28 sowohl abgestützt als auch dichtend aneinander gepresst ausgebildet sind. Dadurch ist gewährleistet, dass das Dichtungselement 6 in dem Flügelrahmen und das Dichtungselement 26 in dem Blendrahmenprofil dichtend gegen das gegenüberliegende Dichtungselement gepresst wird, so dass eine optimale Dichtheit erzielt wird.

In einer weiteren Ausführungsform der vorliegenden Erfindung kann das Dichtungselemente 26 aus einem thermoplastischen, elastomeren Material ausgebildet sein. Dieses Dichtungselement 26 kann dann-auch-durch Coextrusion stoffschlüssig in die entprechende Nut 25 eingebracht worden sein. Im Fall eines Dichtungselemente 26 aus einem thermoplastischen, elastomeren Material wird beim Verschweißen ohne Verwendung von Dichtungsniederhaltern das in die Nut 25 einextrudierte Dichtungselement 26 in der resultierenden Rahmenbaugruppe über seinen gesamten Querschnitt mit dem gegenüberliegenden Dichtungselement verschweißt, wobei die Weichheit und Elastizität der Dichtungselemente in den Eckbereichen der Rahmenbaugruppe durch das Verschweißen nicht beeinträchtig wurden, woraus sich eine sehr hohe Dichtheit ergibt.

In der in Fig. 3 dargestellten Ausführungsform der vorliegenden Erfindung stützt das betreffenden Halteelement 8, 28 das jeweilige Dichtungselement 6, 26 über die gesamte Länge des Fensterprofils 1, 21 ab und führt in den Eckbereichen der auf Gehrung geschnittenen und miteinander verschweißten Fensterprofile 1, 21 dazu, dass die Dichtungselemente 6, 26 beim Vorgang des Angelierens, Verpressens bzw. Verschweißens nicht aus ihrer Position bewegt werden. Darüber hinaus wird beim Verschweißen der auf Gehrung geschnittenen Stirnseiten der Fensterprofile 1, 21 aufgrund der abgeschrägten Anordnung der Dichtungsaufnahmenuten 5, 25 in den Eckbereichen der Fensterprofile 1, 21 beim Verschweißen ohne Verwendung von Dichtungsniederhaltern kaum Schweißabbrandmaterial an die sichtbaren Oberflächen gedrückt. Somit stehen beim Verschweißen der auf Gehrung geschnittenen Stirnseiten der Fensterprofile 1, 21, die Halteelemente 8, 28 optimal mit dem jeweiligen Dichtungselement 6, 26-in Wirkverbindung. Zusätzlich wird durch-das-stoffschlüssige Verbinden der Halteelemente 8, 28 der Fensterprofils 1, 21 die Eckfestigkeit der resultierenden Rahmenbaugruppe 10 erhöht.

## Patentansprüche

1. Rahmenbaugruppe (10) für ein Fenster und/oder eine Tür, umfassend
- mindestens ein Kunststoffprofil (1, 21), umfassend einen Außenüberschlag (3, 23) mit wenigstens einer Hohlkammer (2, 22), einen Aufnahmeabschnitt (4, 24) und eine am Außenüberschlag (3, 23) angeordnete Nut (5, 25) zur Aufnahme eines Dichtelements (6, 26), und
- ein in die Nut (5, 25) des Kunststoffprofils (1, 21) eingezogenes Dichtelement (6, 26),
wobei eine durch die offene Seite der Nut (5, 25) des Kunststoffprofils (1, 21) gebildete Ebene gegen eine Normale zur Unterseite (7, 27) des Kunststoffprofils (1, 21) abgeschrägt ist,
**dadurch gekennzeichnet, dass**
die durch die offene Seite der Nut (5, 25) gebildete Ebene um einen Winkel im Bereich von 8° bis 12° gegen eine Normale zur Unterseite (7, 27) des Kunststoffprofils (1, 21) abgeschrägt ist.

2. Rahmenbaugruppe (10) für ein Fenster und/oder eine Tür gemäß Anspruch 1, **dadurch gekennzeichnet, dass** die Rahmenbaugruppe (10) ferner ein mindestens eine Glasscheibe (11, 12) umfassendes Flächentragelement (9) umfasst, wobei ein KunststoffProfilrahmen (13) aus dem Kunststoffprofil (1) das Flächentragelement (9) stirnseitig umläuft.

3. Rahmenbaugruppe (10) für ein Fenster und/oder eine Tür gemäß Anspruch 1 oder Anspruch 2, **dadurch gekennzeichnet, dass** das Kunststoffprofil (1, 21) weiterhin ein Halteelement (8, 28) umfasst, das das Dichtelement (7, 27) zumindest teilweise abstützt.

4. Rahmenbaugruppe (10) für ein Fenster und/oder eine Tür gemäß Anspruch 3, **dadurch gekennzeichnet, dass** das Halteelement (8, 28) an dem Dichtungselement (7, 27) anliegt.

5. Rahmenbaugruppe (10) für ein Fenster und/oder eine Tür gemäß Anspruch 3 oder Anspruch 4, **dadurch gekennzeichnet, dass** das Halteelement (8, 28) aus einem härteren Werkstoff als das Dichtungselement (7, 27) aufgebaut ist.

## Claims

1. Frame subassembly (10) for a window and/or a door, comprising
- at least one plastics-material profile (1, 21), comprising an exterior overhang (3, 23) with at least one hollow chamber (2, 22), also comprising an accommodating portion (4, 24) and further comprising a groove (5, 25), which is arranged on the exterior overhang (3, 23) and is intended for accommodating a sealing element (6, 26), and
- a sealing element (6, 26), which is drawn into the groove (5, 25) of the plastics-material profile (1, 21),
wherein a plane formed by the open side of the groove (5, 25) of the plastics-material profile (1, 21) is bevelled in relation to a normal to the underside (7, 27) of the plastics-material profile (1, 21),
**characterized in that**
the plane formed by the open side of the groove (5, 25) is bevelled by an angle ranging from 8° to 12° in relation to a normal to the underside (7, 27) of the plastics-material profile (1, 21).

2. Frame subassembly (10) for a window and/or a door according to Claim 1, **characterized in that** the frame subassembly (10) also comprises a sheet-like load-bearing element (9) comprising at least one glass panel (11, 12), wherein a plastics-material profile frame (13) made of the plastics-material profile (1) runs around the sheet-like load-bearing element (9) on the end side.

3. Frame subassembly (10) for a window and/or a door according to Claim 1 or Claim 2, **characterized in that** the plastics-material profile (1, 21) also comprises a retaining element (8, 28), which at least partially supports the sealing element (7, 27).

4. Frame subassembly (10) for a window and/or a door according to Claim 3, **characterized in that** the retaining element (8, 28) butts against the sealing element (7, 27).

5. Frame subassembly (10) for a window and/or a door according to Claim 3 or Claim 4, **characterized in that** the retaining element (8, 28) is made from a harder material than the sealing element (7, 27).

## Revendications

1. Module d'encadrement (10) pour une fenêtre et/ou une porte, comprenant
- au moins un profilé en plastique (1, 21) comprenant un recouvrement extérieur (3, 23) avec au moins une chambre creuse (2, 22), une portion de réception (4, 24) et une rainure (5, 25) disposée au niveau du recouvrement extérieur (3, 23) pour recevoir un élément d'étanchéité (6, 26), et
- un élément d'étanchéité (6, 26) introduit dans la rainure (5, 25) du profilé en plastique (1, 21),
un plan formé par le côté ouvert de la rainure (5, 25) du profilé en plastique (1, 21) étant incliné par rapport à une normale au côté inférieur (7, 27) du profilé en plastique (1, 21),
**caractérisé en ce que**
le plan formé par le côté ouvert de la rainure (5, 25) est incliné suivant un angle dans une plage de 8° à 12° par rapport à une normale au côté inférieur (7, 27) du profilé en plastique (1, 21).

2. Module d'encadrement (10) pour une fenêtre et/ou une porte selon la revendication 1, **caractérisé en ce que** le module d'encadrement (10) comprend en outre un élément de support de surface (9) comprenant au moins une vitre en verre (11, 12), un cadre profilé en plastique (13) constitué du profilé en plastique (1) s'étendant du côté frontal autour de l'élément de support de surface (9).

3. Module d'encadrement (10) pour une fenêtre et/ou une porte selon la revendication 1 ou 2, **caractérisé en ce que** le profilé en plastique (1, 21) comprend en outre un élément de retenue (8, 28) qui supporte au moins en partie l'élément d'étanchéité (7, 27).

4. Module d'encadrement (10) pour une fenêtre et/ou une porte selon la revendication 3, **caractérisé en ce que** l'élément de retenue (8, 28) s'applique contre l'élément d'étanchéité (7, 27).

5. Module d'encadrement (10) pour une fenêtre et/ou une porte selon la revendication 3 ou 4, **caractérisé en ce que** l'élément de retenue (8, 28) est constitué d'un matériau plus dur que l'élément d'étanchéité (7, 27).
